# NEW EUROPEAN PATENT SPECIFICATION

(11) **EP 0 653 331 B2**
(45) Date of publication and mention of the opposition decision: **31.10.2001**
(45) Mention of the grant of the patent: 24.09.1997
(21) Application number: 94117950.9
(22) Date of filing: 14.11.1994
(51) Int. Cl.: B60R 11/02

(54) **Speaker apparatus for use in an automobile vehicle**
Lautsprecher für Kraftfahrzeug
Haut-parteur pour véhicule automobile

(30) Priority: 16.11.1993 JP 28650193
(43) Date of publication of application: 17.05.1995
(73) Proprietor: PIONEER ELECTRONIC CORPORATION, Meguro-ku, Tokyo (JP); TOHOKU PIONEER ELECTRONIC CORPORATION, Tendo-shi, Yamagata-Ken (JP)
(72) Inventor: Endo, Chuichi, c/o Tohoku Pioneer Elec.Corp., Tendo-shi, Yamagata-ken (JP)
(74) Representative: Popp, Eugen, Dr.

(56) References cited:
- IT-U- 94 000 690
- PATENT ABSTRACTS OF JAPAN vol. 16, no. 149 (M-1234) (5192) 13 April 1992 & JP-A-04 005 141 (MITSIBISHI ELECTRIC CORP) 9 January 1992

## Description

### BACKGROUND OF THE INVENTION

The present invention relates to a speaker apparatus for use in an automobile vehicle.

A speaker apparatus for use in an automobile vehicle is usually limited in its size because of various restriction while being installed in a vehicle. In addition, since a speaker apparatus is used in a vehicle usually under a severe condition in which heat resistance, light resistance, and water resistance are required, it is extremely important to design a proper structure and select an appropriate material for making such speaker apparatus. Further, with an increasingly improved quality in a program source, people began to demand a higher and higher audio quality on a speaker apparatus.

In prior art, a speaker apparatus is usually positioned near a dashboard, or installed on a door or on a rear parcel tray inside an automobile vehicle. However, in a position such as that near the dashboard, since an area possible for installing the speaker unit is narrow and has many clearance gaps, it is difficult to obtain a perfect reproduction of an audio signal having a low frequency.

On the other hand, if a door of a vehicle is selected to be used as a position to install the speaker apparatus, such a location is favourable for reproducing an audio signal having a low frequency since the door usually has an interior volume of about 30 liters. But, the front lower portion of a vehicle door is apt to cause a large peak dip when an audio signal is in its middle level frequency, due to an interference of a primarily reflected sound which is caused when a direct original sound is reflected by the floor of a vehicle room. Moreover, since there is usually a difference between left side distance and right side distance, i.e. distances measured on left and right sides respectively from a position where a listener sits to a position where a speaker is located, it is difficult to obtain an adequate stereo effect.

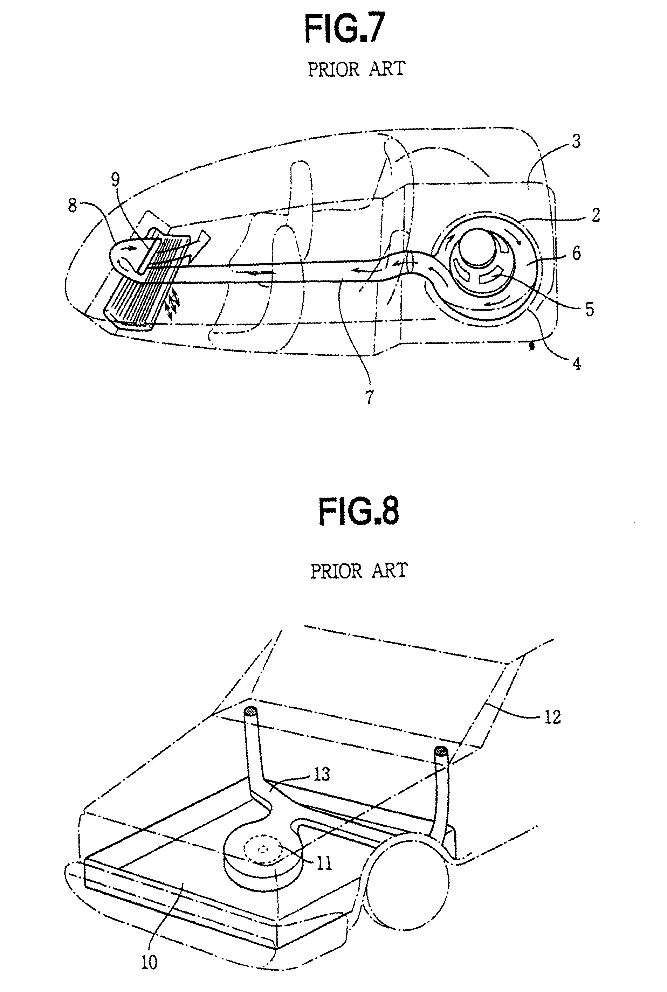

In order to properly install a speaker apparatus in an automobile vehicle, Japanese Patent Application Laid-open 4-5141 has disclosed a speaker apparatus as shown in Fig. 7. Referring to Fig. 7, the speaker apparatus comprises a spiral-shaped duct section 4 integrally formed with a speaker unit 5 and positioned in a rear space of an automobile vehicle, said spiral-shaped duct section 4 including a spiral-shaped duct 6 extending from the front portion of the speaker unit 5, an elongated duct 7 communicating with the spiral-shaped duct section 4 and extending to a front area of the vehicle, a sound emitting section 8 communicating with the front portion of the elongated duct 7 and having a sound spitting hole 9.

In the above prior art, a sound produced from the front of the speaker unit 5 is transmitted through a long duct course including the spiral-shaped duct 6 and the elongated duct 7, and emitted through the sound emitting section 8. Such arrangement of a speaker apparatus in an automobile vehicle permits an adequate reproduction of an audio signal having a low frequency, by virtue of a back-loaded horn effect.

However, since the above speaker unit 5 is installed in a manner which requires that the speaker unit 5 and the spiral-shaped duct section 4 be positioned in a space of a trunk room which is usually prepared for receiving a spare tyre, there occurs a problem that the original effective and useful space in a trunk room becomes smaller due to the occupation of the space by the speaker apparatus.

On the other hand, Japanese Utility Model Application Laid-open 4-15391 discloses another speaker apparatus installed in an automobile vehicle, as shown in Fig. 8.

Referring to Fig. 8, a speaker unit 11 installed in a spare tyre receiving space 10 and another space over the tyre house of the rear wheels is made to be communicated with the vehicle room 12 through sound emitting ducts 13, and such space 10 is used as a cabinet for reproducing an audio signal having a low frequency. In this case, since an audio signal having a low frequency is produced from the speaker unit 11 and guided by the sound emitting ducts 13, it is possible to obtain an adequate reproduction of an audio signal having a low frequency, by virtue of a back-loaded horn effect.

However, since the speaker apparatus is installed in a manner which requires that the speaker unit 11 be positioned at the space 10 of a trunk room which is usually prepared for receiving a spare tyre, there still exists a problem that the original effective and useful space in a trunk room becomes smaller due to the occupation of the space by the speaker apparatus.

Italian Utility Model Application No. MI 94U000690 teaches the installation of low-frequency speakers, particularly for motor vehicles.

### SUMMARY OF THE INVENTION

An object of the present invention is to solve the above-mentioned problems peculiar to the above-mentioned prior arts and to provide a speaker apparatus which does not occupy any effective and useful space in a trunk room while being installed in an automobile vehicle.

According to the present invention, there is provided a speaker apparatus adapted to be installed in an automobile vehicle, comprising : a speaker unit; and a speaker box containing the speaker unit, said speaker box being positioned in a recess portion of a spare tyre.

In an aspect of the present invention, the speaker box containing the speaker unit is secured in the recess portion of the spare tyre, using an installing bolt having a length longer than the height of the speaker box.

In a further aspect of the present invention, the speaker box containing the speaker unit is secured in the recess portion of the spare tyre which is positioned in a recess portion formed on the floor of a trunk room of an automobile vehicle.

In a still further aspect of the present invention, the speaker apparatus includes two speaker units so as to form a twin type.

The above objects and features of the present invention will become more understood from the following description with reference to the accompanying drawings.

"The present invention is defined by Claims 1 to 4 and relate to a speaker apparatus adapted to be installed in an automobile vehicle, comprising a speaker unit and a speaker box containing the speaker unit, said speaker box being positioned in a recess portion of a spare tyre, wherein the speaker box containing the speaker unit is secured in the recess portion of the spare tyre with an installing bolt having a length longer than the height of the speaker box, the installing bolt being secured at its head on the bottom of a recess portion of a trunk room of the vehicle, passing through the bottom of the recess portion of the spare tyre, a central portion of the speaker box and the speaker unit."

### BRIEF DESCRIPTIONON OF DRAWINGS

Fig. 1 is a top plane view showing a speaker apparatus as a first embodiment of the present invention.

Fig. 2 is a cross sectional view showing the speaker apparatus of Fig. 1.

Fig. 3 is a top plane view showing a speaker apparatus

Fig. 4 is a cross sectional view showing the speaker apparatus of Fig. 3.

Fig. 5 is a top plane view showing a speaker apparatus

Fig. 6 is a cross sectional view showing the speaker apparatus of Fig. 5.

Fig. 7 is an explanatory view showing a speaker apparatus of prior art.

Fig. 8 is an explanatory view showing another speaker apparatus of prior art.

### DETAILED DESCRIPTION OF THE PREFERRED EMBODIMENTS

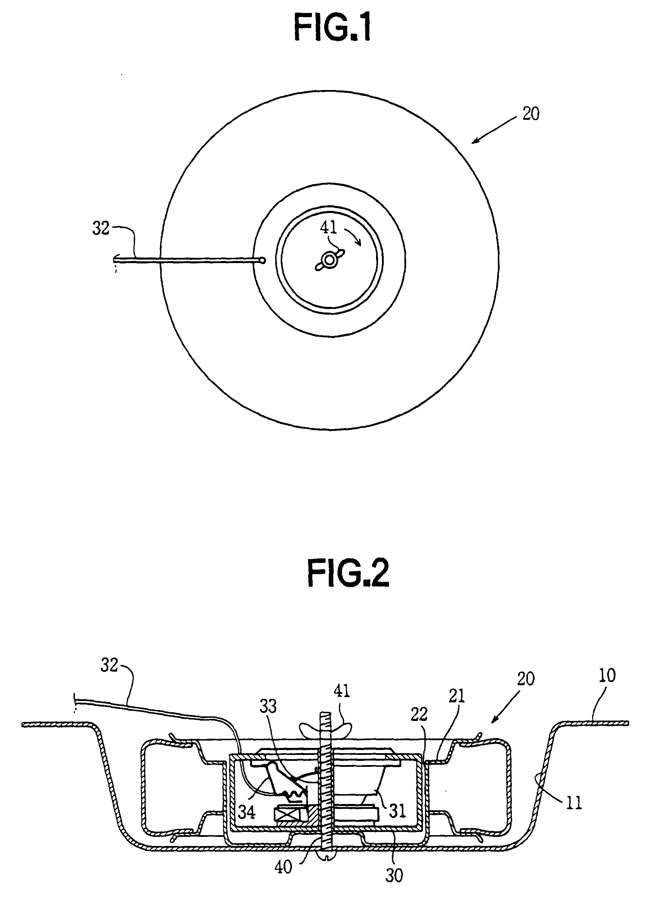

Referring to Figs. 1 and 2 showing a first embodiment of the present invention, a recess portion 11 for receiving a spare tyre 20 is formed on a floor 10 of a trunk room of an automobile vehicle. A speaker box 30 is received and positioned in a recess portion 22 of the spare tyre 20. Contained in the speaker box 30 is a speaker unit 31 having a frame 34 which carries a terminal ( not shown ). A cord 32 is extending from the terminal and running along the floor 10 of the trunk room, serving as a signal line.

As shown in Fig. 2, a pipe member 33 is provided through the central portion of the speaker unit 31 in order that an installing bolt may be inserted therethrough so as to fix the speaker unit 31 in the recess portion 22 of the spare tyre 20. It is understood that using an installing bolt 40 and a nut 41, the spare tyre 20 and the speaker box 30 containing the speaker unit 31 can be fixed in the recess portion 11 formed on the floor 10 of the trunk room.

When a speaker apparatus as described above is to be installed in an automobile vehicle, the speaker box 30 containing the speaker unit 31 is received in the recess portion 22 of the spare tyre 20, with the installing bolt 40 ( already attached through the bottom of the recess portion 22 with the bolt head being secured on the bottom of the recess portion 11 of the trunk room ) being inserted through the pipe member 33 secured in the central portion of the speaker unit 31. The installing bolt 40 has a length longer than the height of the speaker box 30. Then, the cord 32 is pulled therefrom to the floor 10 of the trunk room. Afterwards, a nut 41 is screwed downwardly on to the end portion of the installing bolt 40 so as to finally fix the speaker apparatus in the recess portion of the spare tyre.

Namely, in this embodiment, the speaker box 30 containing the speaker unit 31 is received and positioned in the recess portion 22 of the spare tyre 20, while the installing bolt 40 is led out through the pipe member 33 provided in the central portion of the speaker unit 31. Finally, the nut 41 is screwed on to the end portion of the installing bolt 40 downwardly from a position higher than the top of the speaker box 30, so that the speaker box 30 containing the speaker unit 31 is fixed in the recess portion 22.

Therefore, by way of installing the speaker box 30 containing the speaker unit 30 in the recess portion 22 of the spare tyre 20, the original effective and useful space within the trunk room remains unchanged since it is not occupied by thus installed speaker apparatus.

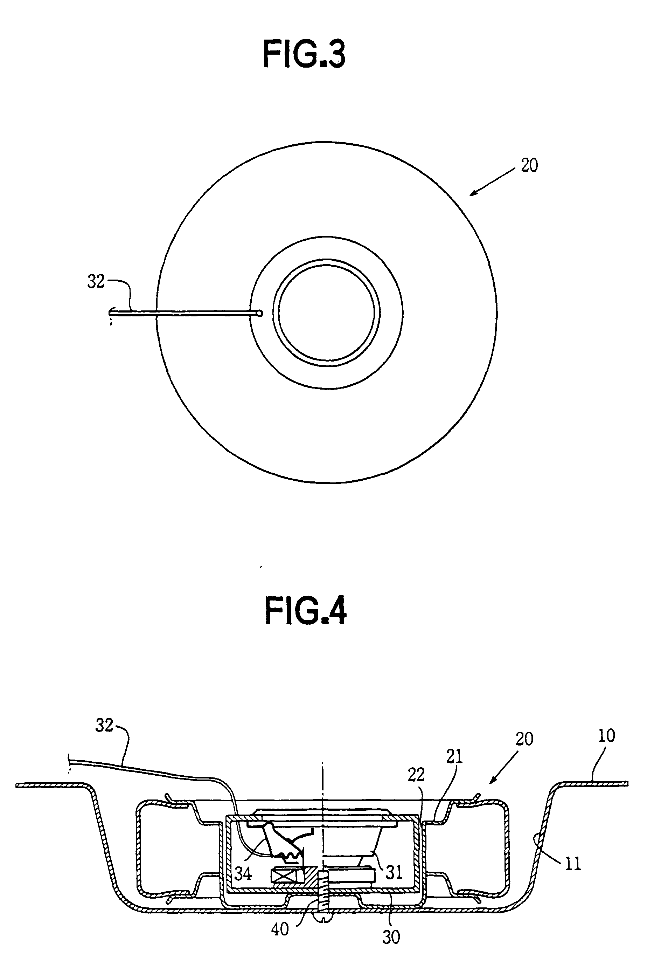

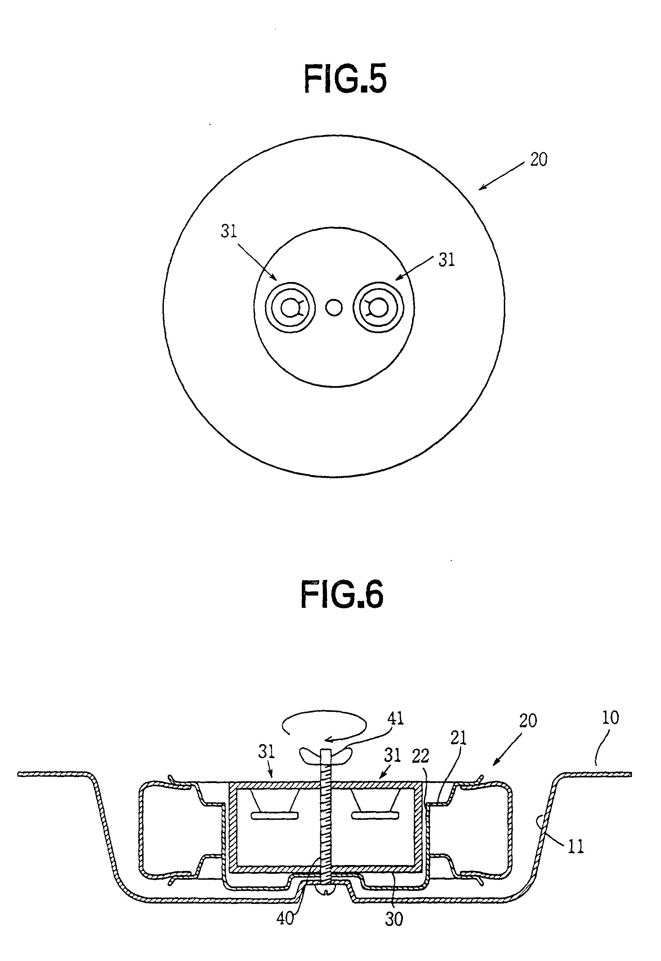

Figs. 3 and 4 show, a modified version for installing the above-mentioned speaker apparatus in an automobile vehicle not covered by the present invention. As shown in Figs. 3 and 4, an installing bolt 40 led from the bottom of the recess portion 11 of the trunk room has a length shorter than the height of the speaker box 30. According to this embodiment, when the speaker box 30 containing the speaker unit 31 is to be installed in the recess portion 22 of the spare tyre 20, the speaker box 30 itself is screwed on to the upper end portion of the installing bolt 40 which has already been led through the bottom of the recess portion 22 and the bottom of the recess portion 11 of the trunk room and has been fixed thereon, so that the speaker box 30 is fixed in the recess portion 22.

Therefore, since the end portion of the installing bolt 40 is disposed within the speaker box 30, such disposition enables the installation of the speaker box 30 to be very neatly finished. Further, since the end portion of the installing bolt 40 is screwed on a yoke member which constitutes a magnetic circuit in the speaker unit 31, it is not necessary to insert an installing bolt through the central portion of the speaker unit 31, thereby avoiding some undesired effects on audio properties which may otherwise be possibly caused by the insertion of the bolt therethrough.

As shown in Figs. 5 and 6 (not covered by the present invention), there are two speaker units 31 and 31 provided in the speaker box 30. In this embodiment, a long installing bolt 40 is used to fix the speaker box 30 in the recess portion 22, and a nut 41 is screwed downwardly on to the end portion of the installing bolt 40. In this way, since the two speaker units 31 and 31 are disposed on both sides of the installing bolt 40, the possible undesired effects on these speaker units may be exactly avoided. As disclosed above, according to the present invention, since the speaker apparatus is installed in the recess portion of a spare tyre, the original effective and useful space of the trunk room of an automobile vehicle will not be occupied by a speaker apparatus even to the least extent.

While the presently preferred embodiments of the this invention have been shown and described above, it is to be understood that these disclosures are for the purpose of illustration and that various changes and modifications may be made without departing form the scope of the invention as set forth in the appended claims.

## Claims

1. A speaker apparatus adapted to be installed in an automobile vehicle, comprising:
a speaker unit (31); and
a speaker box (30) containing the speaker unit (31), said speaker box (30) being positioned in a recess portion (22) of a spare tyre (20),
**characterized in that**
the speaker box (30) containing the speaker unit (31) is secured in the recess portion (22) of the spare tyre (20), with the use of an installing bolt (40) having a length longer than the height of the speaker box (30), said installing bolt (40) being secured at its head on the bottom of a recess portion (11) of a trunk room of the vehicle, passing through the bottom of the recess portion (22) of the spare tyre (20), the central portion of the speaker box (30) and the speaker unit (31).

2. The speaker apparatus according to claim 1,
wherein said installing bolt (40) is inserted through a pipe member (33) provided in the central portion of the speaker unit (31).

3. The speaker apparatus according to claim 1,
wherein the speaker box (30) containing the speaker unit (31) is secured in the recess portion (22) of the spare tyre which is positioned in a recess portion (11) formed on the floor (10) of a trunk room of an automobile vehicle.

4. A speaker apparatus adapted to be installed in an automobile vehicle, comprising:
two speaker units (31, 31); and
a speaker box (30) containing the two speaker units (31), said speaker box (30) being positioned in a recess portion (22) of a spare tyre (20);
**characterized in that**
the speaker box (30) containing the two speaker units (31, 31) is secured in the recess portion (22) of the spare tyre (20), with the use of an installing bolt (40) having a length longer than the height of the speaker box (30), said installing bolt (40) being secured at its head on the bottom of a recess portion (11) of a trunk room of the vehicle, passing through the bottom of the recess portion (22) of the spare tyre (20), the central portion of the speaker box (30), with the two speaker units (31, 31) disposed on both sides of the installing bolt (40).

## Patentansprüche

1. Lautsprechervorrichtung, die zum Einbau in ein Kraftfahrzeug ausgebildet ist und folgendes aufweist:
eine Lautsprechereinheit (31); und
eine Lautsprecherbox (30), die die Lautsprechereinheit (31) enthält, wobei die Lautsprecherbox (30) in einem Ausnehmungsbereich (22) eines Ersatzrads (20) positioniert ist,
**dadurch gekennzeichnet, daß**
die Lautsprecherbox (30), die die Lautsprechereinheit (31) enthält, in dem Ausnehmungsbereich (22) des Ersatzrads (20) unter Verwendung eines Befestigungsbolzens (40) befestigt ist, der eine Länge hat, die größer als die Höhe der Lautsprecherbox (30) ist, wobei der Befestigungsbolzen (40) mit seinem Kopf auf dem Boden eines Ausnehmungsbereichs (11) eines Kofferraums des Kraftfahrzeugs befestigt ist, durch den Boden eines Ausnehmungsbereichs (22) des Ersatzrads (20), den Mittelbereich der Lautsprecherbox (30) und die Lautsprechereinheit (31) verläuft.

2. Lautsprechervorrichtung nach Anspruch 1, wobei der Befestigungsbolzen (40) durch ein Rohrelement (33), das in dem Mittelbereich der Lautsprechereinheit (31) vorgesehen ist, eingeführt ist.

3. Lautsprechervorrichtung nach Anspruch 1, wobei die Lautsprecherbox (30), die die Lautsprechereinheit (31) enthält, in dem Ausnehmungsbereich (22) des Ersatzrads (20) befestigt ist, das in einem Vertiefungsbereich (11) positioniert ist, der an dem Boden (10) eines Kofferraums eines Kraftfahrzeugs ausgebildet ist.

4. Lautsprechervorrichtung, die zum Einbau in ein Kraftfahrzeug ausgebildet ist und folgendes aufweist:
zwei Lautsprechereinheiten (31, 31); und
eine Lautsprecherbox (30), die die zwei Lautsprechereinheiten (31) enthält, wobei die Lautsprecherbox (30) in einem Ausnehmungsbereich (22) eines Ersatzrads (20) positioniert ist,
**dadurch gekennzeichnet, daß**
die Lautsprecherbox (30), die die zwei Lautsprechereinheiten (31, 31) enthält, in dem Ausnehmungsbereich (22) des Ersatzrads (20) unter Verwendung eines Befestigungsbolzens (40) befestigt ist, der eine Länge hat, die größer als die Höhe der Lautsprecherbox (30) ist, wobei der Befestigungsbolzen (40) mit seinem Kopf auf dem Boden eines Ausnehmungsbereichs (11) eines Kofferraums des Kraftfahrzeugs befestigt ist, durch den Boden eines Ausnehmungsbereichs (22) des Ersatzrads (20), den Mittelbereich der Lautsprecherbox (30) und die Lautsprechereinheit (31) verläuft, wobei die beiden Lautsprechereinheiten (31, 31) auf beiden Seiten des Befestigungsbolzens (40) angeordnet sind.

## Revendications

1. Appareil haut-parleur destiné à être installé dans un véhicule automobile comprenant:
une unité haut-parleur (31); et
un boîtier de haut-parleur (30) comprenant l'unité haut-parleur (31), le boîtier de haut-parleur (30) étant placé dans une partie une partie évidée (22) de la roue de secours (20),
**caractérise en ce que**
le boîtier de haut-parleur (30) contenant l'unité haut-parleur (31) est fixé dans la partie évidée (22) de la roue de secours (20) en utilisant un boulon d'installation (40) ayant une longueur plus grande que la hauteur du boîtier de haut-parleur (30) lequel boulon d'installation (40) étant installé avec sa tête sur le plancher (10) d'une partie évidée (11) d'un coffre du véhicule automobile, ainsi passant par le plancher d'une partie évidée (22) de la roue de secours (20), par la partie centrale du boîtier de haut-parleur (30) et par l'unité haut-parleur (31).

2. Appareil haut-parleur selon la revendication 1, le boulon d'installation (40) étant inséré à travers un organe tubulaire (33) prévu dans la partie centrale de l'unité haut-parleur (31).

3. Appareil haut-parleur selon la revendication 1, dans laquelle le boîtier de haut-parleur (30) contenant l'unité haut-parleur (31) est fixé dans la partie évidée (22) de la roue de secours (20), laquelle est placée dans une partie évidée (11) formée dans le plancher (10) du coffre du véhicule automobile.

4. Appareil haut-parleur destiné à être installé dans un véhicule automobile comprenant:
deux unités haut-parleur (31, 31); et
un boîtier de haut-parleur (30) comprenant les deux unités haut-parleur (31), le boîtier de haut-parleur (30) étant placé dans une partie une partie évidée (22) de la roue de secours (20),
**caractérise en ce que**,
le boîtier de haut-parleur (30) contenant les deux unités haut-parleur (31, 31) est fixé dans la partie évidée (22) de la roue de secours (20) en utilisant un boulon d'installation (40) ayant une longueur plus grande que la hauteur du boîtier de haut-parleur (30) lequel boulon d'installation (40) étant installé avec sa tête sur le plancher (10) d'une partie (11) d'un coffre du véhicule automobile, ainsi passant par le plancher d'une partie évidée (22) de la roue de secours (20), par la partie centrale du boîtier de haut-parleur (30) et par l'unité haut-parleur (31, les deux unités haut-parleur (31, 31) étant placées sur des deux côtes du boulon d'installation (40).
